# EUROPEAN PATENT APPLICATION

(11) **EP 4 803 700 A1**
(43) Date of publication of application: **09.09.2026**
(21) Application number: 26162699.8
(22) Date of filing: 05.03.2026
(51) Int. Cl.: E01H 5/10, B09B 1/00, B65G 11/10

(54) **DEVICE FOR DEPOSITING SNOW IN A WATER BODY**

(30) Priority: 06.03.2025 NO 20250244
(71) Applicant: FELICIANNE AS, 0260 Oslo (NO)
(72) Inventor: HØGMOE, Jørgen, 0260 Oslo (NO)
(74) Representative: Bryn Aarflot AS

(57) **Abstract**

The present invention relates to an apparatus for the disposal and melting of snow and ice, particularly collected from urban areas. The apparatus comprises a chute (101) with an upper open end (102) and a lower end (103), configured to receive snow and ice at the upper end and direct them downward. Carrying devices, such as buoyancy elements (104) or a rack attached to a quay, maintain the upper end above the surface of a body of water. A vessel (111) attached at the lower end collects solids settling from the meltwater as the snow and ice melt. The device utilizes the natural heat from seawater or another large body of water to melt the snow, reducing the need for additional energy input. It efficiently manages pollutants by allowing solids to settle and be removed, thus reducing environmental impact. Designed to be low-cost and easy to handle, the apparatus can be stowed away during off-season periods.

## Description

### Technical Field

The present invention relates to a device for disposal and melting of snow that has been removed from surfaces, such as roads and streets.

The invention is specifically directed to a device that can be placed in a body of water, such as the sea and into which the collected snow can be dumped.

### Background Art

After snow falls, and in particular significant snow falls, the snow must be removed from the road and street surfaces. As a first option, the snow is plowed to the side of the road. When the road is in the open countryside, there is often sufficient space to leave the snow there until it melts in the Spring. However, in roads and streets inside towns and cities, the snow often ends up in parking lots along the street or even the pavement, where it becomes an obstacle to parking and walking. Consequently, the piles up snow has to be removed. The snow is then loaded into lorries and driven away.

The snow can be piled up in large snow deposits on land, but experience shows that when the deposit gets large enough it will take a substantial time for it to melt, and sometimes it does not melt completely until the next Winter. Moreover, the deposited snow contains pollutants.

Such pollutants may, inter alia, comprise:

Particulate matter from vehicle exhaust, tire and brake wear, and atmospheric deposition. This includes fine particles like soot, dust, and other airborne pollutants.

Heavy metals such as lead, zinc, copper, cadmium, and nickel, originating from vehicle exhaust, tire wear, brake linings, corrosion of metal parts, and industrial emissions.

Oil, grease, and other petroleum hydrocarbons from vehicle leaks, exhaust emissions, and asphalt wear, including polycyclic aromatic hydrocarbons (PAHs), which are of environmental concern.

Road salt (usually natrium chloride) and other de-icing agents used to melt ice and snow, which can have detrimental effects on soil and water quality when the snow melts.

Abrasive materials like sand and grit used for traction on icy roads can be present in large quantities in the snow. While not pollutants themselves, they can contribute to sedimentation and turbidity in water bodies when the snow melts.

Organic contaminants such as antifreeze (ethylene glycol), windshield washer fluids (methanol, ethylene glycol), and other chemicals can be present due to leaks and spills from vehicles.

Various types of litter, including plastics, cigarette butts, and other debris, can be collected in snowbanks along roads.

In addition to this, designated land disposal sites for snow are often placed at a distance from the city centre. The transportation of snow to the disposal sites is therefore costly, time-consuming, and environmentally detrimental due to the emissions from transportation vehicles.

Earlier, it was a common practice to dump the snow into the sea or another large body of water. Due to the warmer water, the snow melted relatively quickly and "disappeared". However, in the later years the consequences of this dumping has proved to be serious to the marine life and ecosystem.

Many of the compounds released, such as heavy metals (lead, zinc, copper, cadmium), petroleum hydrocarbons (oil, grease, polycyclic aromatic hydrocarbons), de-icing chemicals (sodium chloride), and organic contaminants (antifreeze, windshield washer fluids), proved to be toxic to aquatic organisms and disrupted ecological balance.

The long-term effect of the pollutants also proved to be serious. It degraded the water quality, and some of the compounds accumulated in the marine organism. Eventually, this potentially was also harmful to humans.

Reduction of marine life has in some places caused a practically dead sea. In some places only the toughest organisms survived, resulting in an ecosystem with very few species. Such a homogeneous ecosystem has significantly reduced capacity of absorbing organic compounds that otherwise would have posed little problem, such as drainage of fertilizers from farmland.

Locally, the litter such as plastics, cigarette butts, bicycles and other debris will over time create a thick layer of debris.

Moreover, the economic repercussions for communities that rely on these ecosystems for fishing, tourism, and recreation can be serious. Pollution can lead to the decline of fish populations, impacting commercial and recreational fisheries. Deteriorated water quality and polluted beaches can deter tourism, affecting local economies.

Many regions have therefore regulations prohibiting or limiting the dumping of snow into natural water bodies due to environmental concerns. Ignoring these regulations can result in legal consequences and reflect a lack of ecological stewardship. Responsible management of snow disposal is essential to protect marine environments and comply with environmental protection laws.

By understanding and acknowledging these negative consequences, municipalities and agencies are seeking alternative snow disposal methods that minimize environmental harm, such as designated snow dumps with proper runoff treatment, melting facilities, or recycling snow for beneficial uses. Such solutions are often very costly.

JP 4448828 B2 discloses a system and method for melting and purifying snow and ice, particularly in polluted urban areas. The system utilizes the enthalpy from a water source to melt the snow and ice and includes a purification device to remove pollutants. This invention aims to address environmental concerns by providing a more efficient and less polluting method, thereby reducing transportation needs and emissions. The system is modular and adaptable for use in various locations, including cities and near large water bodies.

However, JP 4448828 B2 has several disadvantages. The system's reliance on a purification device to remove pollutants can be complex and costly to maintain. Additionally, the modular nature of the system may require significant space and infrastructure, which may not be feasible in all urban environments.

While JP 4448828 B2 offers a method for melting and purifying snow and ice, it presents challenges related to complexity, cost and space requirements. These disadvantages highlight the need for a more straightforward, cost-effective, and versatile solution for snow disposal in urban areas.

NO 334886 describes handling of contaminated snow and ice, particularly in urban areas, and how it can be managed in an environmentally friendly manner. Specifically, it concerns a facility for melting and purifying snow and ice. The facility includes a melting device with a mixing chamber for snow, ice, and water from a large water source for heat exchange, and a purification device to remove dissolved and undissolved contaminants from the melted snow and ice.

The facility may include additional features such as waste sorting, ice crushing, and the use of hot water to prevent clogging. It can be placed on a barge near urban areas or on land.

The facility is large and costly. The use depends on mixing of snow and ice with water from the large water source. This added water means that the facility has to handle larger water quantities than what is contained in the snow and ice that has entered the facility.

### Summary of invention

The present invention has as a main objective to provide a disposal device for snow and ice that is efficient and straightforward and allows the use of the heat from sea water or another large body of water to melt the snow. The device and method of the invention reduces the need for complex purification systems and extensive infrastructure, making it a more cost-effective and versatile solution for urban snow disposal. The device also allows for the settling and removal of solids contained in the snow, ensuring that pollutants and debris are managed effectively.

Moreover, the device aims at being low cost, easy to handle and stow away off-season.

The above objectives as well as other advantages are achieved by the features of the subsequent claim 1, which defines an apparatus for disposal and melting of snow and ice, comprising: a chute having an upper open end and a lower end, where the chute is configured to receive snow and ice at the upper end and direct it toward the lower end; carrying devices attached to the chute to maintain the upper end above the surface of a body of water when the chute is placed therein; and vessel formed at the lower end of the chute, the vessel being configured to collect solids settling from meltwater as the snow and ice melt.

In one embodiment, the carrying devices comprise one or more buoyancy elements, which will enable the apparatus to float in the water and ensures that the upper end is always above the water surface.

In a further embodiment, the carrying devices comprise a rack attached to a quay, which enable an easy adjustment of the position of the opening.

Conveniently, the apparatus comprises a pump positioned to remove solids collected in the vessel. This enables retrieval of sedimented solids without having to bring the vessel to the surface

Preferably, the chute has a lower end that is narrower than the upper end. This facilitates concentration of the particulate solids into a smaller space as they sink through the chute.

In one embodiment, the chute is made of a flexible material allowing the chute to expand in volume as snow and ice are introduced. This enables easy and space saving storage of the apparatus when not in use. In use, it enables the apparatus to be almost completely submerged before snow and ice is dumped into the apparatus.

Conveniently, the flexible material is selected from the group consisting of polyethylene, polyvinyl chloride (PVC), canvas, nylon, and silicone-coated nylon, which are considered very suitable materials for the purpose.

In one embodiment, the chute is substantially watertight to prevent meltwater from escaping into the surrounding body of water during melting. This makes it possible to pump up the meltwater and run it through a purification process.

Alternatively, the chute may be semi-permeable, allowing water to seep through the chute material but substantially withholding particles.

In one embodiment, a flexible hose is coupled between the lower end of the chute and the vessel, allowing for vertical movement due to tides or water level variations. This makes it also possible to place the apparatus at locations with varying depths.

Conveniently, the pump is a sludge pump positioned within the vessel. This allows for pumping of solids from greater depths than a surface placed pump.

Conveniently, a sludge hose is connected to the pump and extending to a receptacle located above the water surface for receiving solids pumped from the vessel. Thereby solids may be pumped to the surface at any desired time.

Conveniently, the apparatus comprises attachment means for securing the chute adjacent to a quay, wherein an edge of the chute faces the quay to facilitate dumping of snow and ice from a vehicle on the quay into the chute. This ensures that the apparatus will be in a suitable position for dumping the snow directly from a lorry, a front-loader or similar.

Conveniently, the apparatus comprises a slide extending from the quay into the chute to guide snow and ice being loaded into the chute. This ensures that snow does not end up outside the chute.

Preferably, the chute is made of a heat-conductive material to enhance heat transfer from the surrounding water to the snow and ice within the chute. This ensures a rapid melting of the snow and ice inside the chute.

Conveniently, the chute comprises stiffeners attached to the upper end of the chute to maintain the opening spread open during use. This ensures that the snow and ice does not fall outside the opening when tipped into the chute.

In one embodiment, the apparatus further comprises a water supply arrangement configured to introduce water into the chute from outside of the chute, for instance from the surrounding body of water and/or from a water supply line at a quay, whereby the temperature of the water inside the chute is increased by the warmer supplied water, and the melting time is reduced. In one embodiment, the water supply arrangement is configured to introduce water in a manner that creates movement and/or circulation in the water mass inside the chute, for instance by one or more inlet conduits and/or nozzles configured to provide one or more jets directed downwardly and/or tangentially. In one embodiment, the water supply arrangement comprises one or more spray nozzles configured to spray water directly onto snow and/or ice in the chute, optionally in combination with introducing water into the water mass inside the chute.

In one embodiment, the apparatus comprises a heater configured to increase the temperature of the introduced water before the water is supplied into the chute, thereby further reducing the melting time, wherein the heater may be based on electricity, gas and/or a heat exchanger.

In one embodiment, the apparatus comprises a circulation device configured to create circulation in the water inside the chute and/or adjacent the chute so as to enhance heat transfer and/or avoid local freezing, wherein the circulation device may be a removable propeller-based unit configured for temporary mounting when needed.

In one embodiment, the apparatus comprises a filter unit arranged at or near a lower portion of the apparatus, for filtering meltwater and discharging filtered water to the surrounding body of water, wherein the filter unit is configured to discharge a flow corresponding substantially to an introduced flow so as to maintain a desired liquid level in the chute during operation.

### Detailed description of the invention

The invention will now be described referring to the encloses drawings, which illustrate a non-limiting exemplary embodiment of the invention, where:
FIG. 1 illustrate schematically a snow disposal device with a chute, buoyancy elements, and a sludge pump, in accordance with an embodiment of the invention as seem in an elevated view.
FIG. 2 is a schematic drawing illustrating the snow disposal device of figure 1 in planar view.

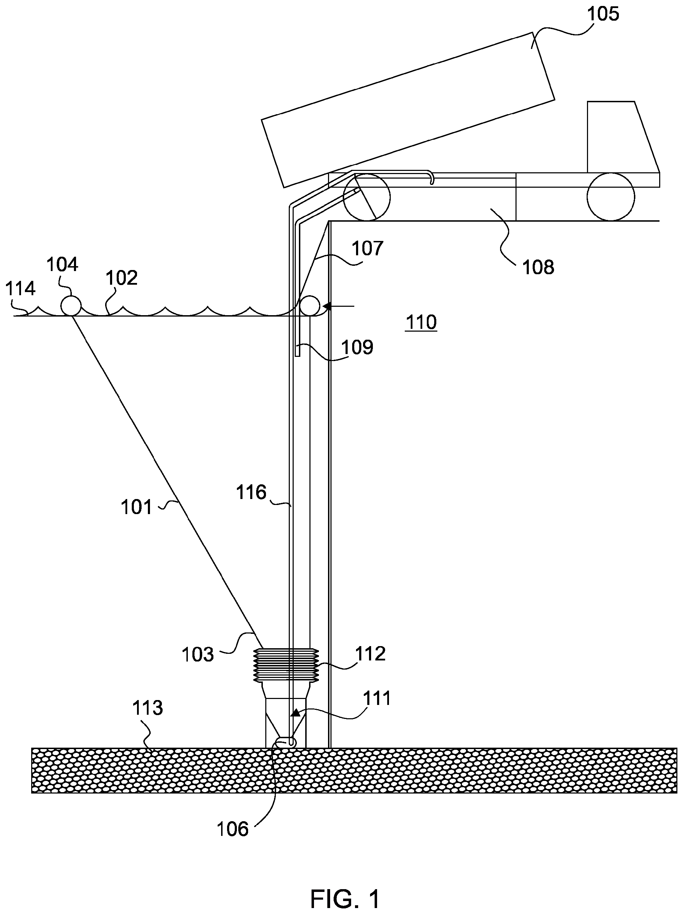

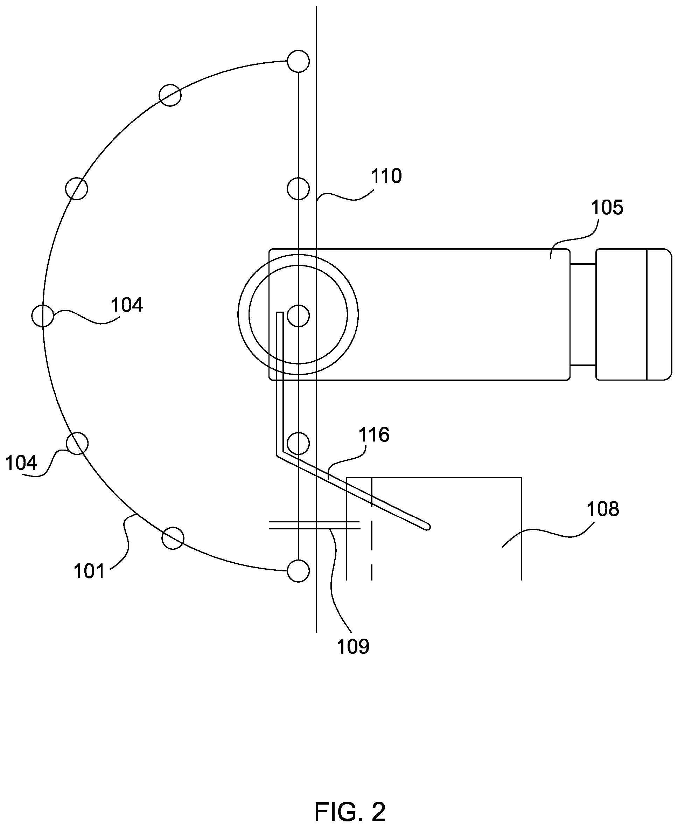

The present invention relates to a snow disposal device designed for placement in the sea adjacent to a quay 110, as illustrated in Figures 1 and 2, which show the device in a side elevation view and planar view, respectively. The device comprises a chute 101 with an upper wide and open end 102 and a lower narrow end 103. The chute 101 is designed to facilitate the efficient and straightforward disposal of snow directly into the sea, utilizing the natural heat of the water to melt the snow.

The upper end 102 of the chute 101 is held above the water surface 114 by buoyancy elements 104. The buoyancy elements can be standard buoys 104 that are attached at spaced apart positions along the edge of the chute 101, as shown in figure 2. The buoyancy may also be provided with elongate elements extending along the upper edge of the chute 101. The chute is attached to the quayside, such as by ropes or similar. The edge of the chute 101 facing the quay 110 is thereby kept close to the quayside.

The chute 101 may have the shape of a half cone with a flat side against the quay 110, as shown in figure 2.

A conical chute is the most convenient shape for the snow receiving portion of the apparatus. However, the chute may also have different shapes, including another narrowing cross-section, such as a cylindrical cross-section, an oval cross-section or a polygonal cross-section. The cross-section may also be uniform along the height, possibly with an inclined lower part.

A slide 107, such as in the form of a tarpaulin, may be attached to the quay 110 edge and extend into the chute 101, to guide the snow being tipped from the lorry 105 into the chute 101.

Instead of buoyancy elements, the chute 101 opening 102 may also be held above the water surface other carrying devices, such as by a rack or similar attached to the quay, possibly with lines attached between the rack and the chute 101. This facilitates for easy adjustment of the position of the opening. The carrying devices can also be a combination of buoyancy elements and a rack.

The lower end 103 of the chute 101 is designed to be closed against the surrounding water. A vessel, such as a bucket 111 is attached to the lower end of the chute 101. Preferably a flexible hose 112 is arranged between the lower end 103 of the chute and the vessel 111. This hose 112 may be a corrugated tube that can both elongate and bend to a certain degree.

Preferably, the vessel 111 should be placed on the bottom 113 of the water in an upright position. The flexible hose 112 will allow for height differences between the water surface 114 and the bottom 113, such as tidal differences or differences in height at different places along the quay 110. The hose 112 may be cut to length according to the depth at the place where the device is to be used.

A sludge pump 106 is positioned below the lower end 103 of the chute 101, preferably within the vessel 111, to manage the solids that settle as the snow melts. The sludge pump 106 is coupled to a sludge hose 116, extending to the surface. The pump 106 facilitates the removal of settled pollutants and debris, ensuring that the melted snow is effectively purified before being expelled back into the sea. The use of a sludge pump 106 provides a cost-effective solution for managing pollutants, reducing the complexity and maintenance costs associated with traditional purification systems.

The chute 101 is preferably flexible, allowing it to expand in volume as snow is dumped into it. This flexibility also ensures that the chute can accommodate varying amounts of snow, making it adaptable to different snowfall conditions. Once the chute 101 has expanded to its full size, the snow is allowed to melt, and the solids will gradually settle in the vessel 111.

A flexible chute 101 will also save a significant amount of space when the device is not in use. It can be conveniently folded and stowed away during the Summer.

The sediments collected in the vessel 111 can be transferred via the sludge hose 116 to a receptacle, such as a container 108 on the quay. The container may be capable of storing both the sediments and the water that is pumped with the sediments, but the water may also be sent through a filter (not shown) and pumped out and into the chute 101 again through a return hose 109.

Alternatively or additionally, the filter may form part of a filter unit arranged at or near a lower portion of the apparatus (for instance in or in connection with the vessel 111 and/or at an outlet from the lower part of the chute 101), the filter unit being configured to filter meltwater and discharge filtered water to the surrounding body of water. In one embodiment, the filter unit is configured to discharge substantially the same amount of water as the amount of water introduced at the upper portion of the chute 101, thereby maintaining a desired liquid level in the chute 101 during operation. In one embodiment, the filter unit comprises one or more filter stages, such as a screen and/or particle filter, and may be configured to separate floating particles and/or suspended solids from water to be discharged.

As the chute 101 is watertight, no meltwater will escape to the surrounding water during the melting. The device will be left in the sea for as long it takes to melt the snow. To ensure a good heat transfer from the surrounding water to the snow, the chute is made of a relatively thin material. The material preferably has good heat conductivity. To achieve this, the chute may be made of a tarpaulin with metal threads, such as aluminium threads woven into it.

When all the snow has melted due to the heat transfer, the device may still be left for some time in the water to allow as much as possible of the solids to sink into the vessel 111. The remaining sludge is pumped up by the pump 106. The vessel may then be lifted upwards, such as by pulling on a rope (not shown) attached thereto. While the vessel 111 is lifted, the water inside the chute will spill over the upper edge 102 of the chute 101 and into the sea. This water is now relatively clean.

Floating particles may be collected from the water surface by using a skimmer net, such as a type with a handle commonly used for cleaning swimming pools. This is conveniently done after the snow has melted.

When the vessel 106 has reached the surface, any remaining sediments will be poured into the container 108.

When the device is placed into the sea, the chute 101 will be in a limp state having an as little volume as practically possible. The opening 102 may be spread open by stiffeners, such as a ring attached to the edge of the chute 101, to allow for the tipping of snow therein without spilling snow outside of the opening 102. The flexible chute 101 is made of a sheet material that allows it to expand in volume as snow is dumped. As snow is tipped into the chute, it will expand until it has reached the maximum volume.

The sheet material of the chute can be chosen from, e.g. the following: Polyethylene, Polyvinyl chloride (PVC), Canvas, such as heavy-duty cotton or polyester fabric, Nylon or Silnylon, i.e. silicone-coated nylon. The sheet is conveniently made waterproof, to prevent melted snow from seeping through the sheet. However, it may also be made semi-permeable, so that water molecules will be let through, but larger molecules will be held back. The material may also be waterproof but have small holes therein that will let water through but hold back particles above a certain size. The walls of the chute can be made water permeable whether the chute is stiff or flexible.

A water permeable, whether it is the material as such that is permeable, or it has small holes, will enable continuous filling of snow into the chute also when the chute is completely filled with water and snow, as the snow that is dumped into the chute will displace water through the walls of the chute. Consequently, the apparatus may be left for a prolonged time in the body of water, such as through the snow ploughing season.

Although the chute preferably is flexible, it may also alternatively be stiff. In that case, the chute 101 is lowered into the water to float with the opening 102 well above the water surface, but below the quay level. The weight of the flexible hose 112, the vessel 111 and the sludge pump 106 contributes to keeping the chute in an upright position. As snow is tipped into the chute 101, the chute will float lower in the water until the opening 102 is slightly above the water surface. Before the opening is at the water level, the tipping of snow into the chute 101 is stopped, the snow is allowed to melt, and solids in the meltwater is allowed to sink into the vessel 111. The sludge in the vessel is pumped up to the surface, such as into the container 108. Thereafter, the now relatively clean water in the chute 101 can be pumped out and into the surrounding water. The snow disposal device is now ready to receive another batch of snow and ice.

As many city centres are close to a large body of water, the snow can be easily dumped into the snow disposal device from a vehicle 105 positioned on the quay without having to transport the snow over long distances, thereby reducing energy consumption, emissions and costs.

The temperature of the sea surface will usually be above freezing even in the winter, especially in harbour areas where upwelling due to ship traffic, and discharge of water through outlet pipes, brings warmer water from the depth to the surface. Hence, the snow in the disposal device will gradually melt due to the heat transferred from the surrounding water. This melting will happen without the need for additional energy input, leveraging the natural thermal properties of the sea. However, to speed up the melting, a moderate amount of water from the surrounding sea or lake may be pumped or otherwise let into the chute 101 and preferably be thoroughly mixed with the snow and ice.

The introduced water may be taken from outside the chute, for instance from the surrounding sea or lake and/or from a water supply line at the quay 110. The introduced water may be led into the chute 101 through one or more inlet conduits and/or nozzles, wherein the inlet conduits and/or nozzles may be arranged such that the introduced water creates movement in the water mass inside the chute 101, for instance by providing one or more jets directed downwardly and/or tangentially so as to promote circulation and mixing. In one embodiment, the apparatus comprises a heater arranged upstream of the inlet conduit(s)/nozzle(s), for increasing the temperature of the introduced water prior to introduction into the chute 101, thereby further reducing the melting time. The heater may, for instance, be an electric heater, a gas-fired heater and/or a heat exchanger.

In one embodiment, the introduced water is supplied through one or more spray nozzles arranged to spray water directly onto the snow and/or ice in the chute 101, thereby enhancing heat transfer at the snow/ice surface and promoting collapse and mixing of the snow/ice mass. The spraying may be used alone or in combination with introducing water into the water mass inside the chute 101.

In one embodiment, the apparatus comprises a circulation device configured to create circulation in the water inside the chute 101 and/or adjacent the chute 101, thereby enhancing convective heat transfer and reducing the risk of local freezing. The circulation device may be a removable propeller-based unit configured for temporary mounting when needed, for instance by attachment to a vessel, a quay structure and/or the apparatus, without requiring permanent installation.

To enhance the melting, lumps of snow and ice may be broken up before entering the chute 101. A per se known device may be placed on the quay side to facilitate this. Moreover, large objects, such as bicycles, electric scooters, car parts etc, which could damage the chute 101, may also be sorted out before the snow ends up in the chute 101.

Chemicals, such a PCB, heavy metals, oil, salt etc. will only in a very limiting degree sediment in the vessel. However, the water may be transferred to a water treatment facility for removal of such compounds, such as by carbon filtration, ion exchange, chemical precipitation, membrane filtration etc. Since the meltwater is relatively free from solids mechanical filtration of the water is not needed.

Tests of the meltwater may be done to ensure that it does not contain excess harmful substances. If tests show that the meltwater does not contain harmful substances above a certain level, the water may be let into the sea or lake without further processing.

In one embodiment, snow is deposited locally in the vicinity of the apparatus (for instance at or near the quay 110) and is supplied gradually to the chute 101 in smaller batches, for instance by a tractor with a bucket, a front loader or similar equipment, thereby enabling more continuous operation and reduced waiting time for transport vehicles at the quay. It is also possible to use a snow blower or similar device on the quayside to move the snow and ice into the chute.

## Claims

1. An apparatus for disposal and melting of snow and ice, comprising:
a. a chute having an upper open end and a lower end, the chute being configured to receive snow and ice at the upper end and direct it toward the lower end;
b. carrying devices attached to the chute to maintain the upper end above the surface of a body of water when the chute is placed therein;
c. a vessel formed at the lower end of the chute, the vessel being configured to collect solids settling from meltwater as the snow and ice melt.

2. The apparatus according to claim 1, wherein the carrying devices comprise one or more buoyancy elements.

3. The apparatus according to claim 1 or 2, wherein the carrying devices comprise a rack attached to a quay.

4. The apparatus of any of the claims 1-3, further comprising a pump positioned to remove solids collected in the vessel.

5. The apparatus according to any of the preceding claims, wherein the lower end is narrower than the upper end.

6. The apparatus according to any of the preceding claims, wherein the chute is made of a flexible material allowing the chute to expand in volume as snow and ice are introduced.

7. The apparatus according to claim 6, wherein the flexible material is selected from the group consisting of polyethylene, polyvinyl chloride (PVC), canvas, nylon, and silicone-coated nylon.

8. The apparatus according to any of the preceding claims, wherein the chute is substantially watertight to prevent meltwater from escaping into the surrounding body of water during melting.

9. The apparatus according to any of the preceding claims, wherein a flexible hose is coupled between the lower end of the chute and the vessel, allowing for vertical movement due to tides or water level variations.

10. The apparatus according to claim 5, wherein the pump is a sludge pump positioned within the vessel.

11. The apparatus according to claim 10, further comprising a sludge hose connected to the pump and extending to a receptacle located above the water surface for receiving solids pumped from the vessel.

12. The apparatus according to any of the preceding claims, further comprising attachment means for securing the chute adjacent to a quay, wherein an edge of the chute faces the quay to facilitate dumping of snow and ice from a vehicle on the quay into the chute.

13. The apparatus according to any of the preceding claims, further comprising a water supply arrangement configured to introduce water into the chute from outside the chute to increase the temperature inside the chute and reduce melting time.

14. The apparatus according to any of the preceding claims, wherein the chute is made of a heat-conductive material to enhance heat transfer from the surrounding water to the snow and ice within the chute.

15. The apparatus according to any of the preceding claims, further comprising stiffeners attached to the upper end of the chute to maintain the opening spread open during use.
